# EUROPÄISCHE PATENTANMELDUNG

(11) **EP 0 717 455 A1**
(43) Veröffentlichungstag der Anmeldung: **19.06.1996**
(21) Anmeldenummer: 95119263.2
(22) Anmeldetag: 07.12.1995
(51) Int. Cl.: H01M 4/50, C01G 45/00

(54) **Verfahren zur Herstellung von Lithium und Mangan-(III/IV) enthaltende Spinellen**

(30) Priorität: 15.12.1994 DE 4444705; 08.06.1995 DE 19520874
(71) Anmelder: BASF Magnetics GmbH, D-67059 Ludwigshafen (DE)
(72) Erfinder: Schwab, Ekkehard, Dr., D-67434 Neustadt (DE); Dausch, Wilma M., Dr., D-67117 Limburgerhof (DE); Heil, Günter, Dr., D-67071 Ludwigshaven (DE); Steiniger, Helmut, Dr., D-67551 Worms (DE); Körner, Reinhard, Dr., D-67227 Frankenthal (DE)
(74) Vertreter: Karau, Wolfgang, Dr.

(57) **Zusammenfassung**

Herstellung von Lithium und Mangan-(III/IV) enthaltenden Spinellen durch Umsetzung stöchiometrischer Mengen einer Lithiumverbindung, einer Mangenverbindung und gegebenenfalls einer weiteren Metallverbindung bei 200 bis 800°C unter Bedingungen, unter denen das Mangen eine durchschnittliche Oxidationsstufe von 3,5 bis 4,0 einnimmt, indem man die Umsetzung unter Vermischung der Reaktanden vornimmt.

Dabei können Spinelle neuer Morphologie erhalten werden, die als Kathodenmaterial in elektrochemischen Zellen verwendet werden können.

## Beschreibung

Die vorliegende Erfindung betrifft ein Verfahren zur Herstellung von Lithium und Mangen-(III/IV) enthaltenden Spinellen durch Umsetzung stöchiometrischer Mengen einer Lithiumverbindung, einer Manganverbindung und gegebenenfalls einer weiteren Metallverbindung bei 200 bis 800°C unter Bedingungen, unter denen das Mangan eine durchschnittliche Oxidationsstufe von 3,5 bis 4,0 einnimmt.

Ferner betrifft die Erfindung Spinelle dieser Art mit neuer Morphologie, ihre Verwendung als Kathodenmaterial für elektrochemische Zellen sowie elektrochemische Zellen, welche diese Spinelle als Kathodenmaterial enthalten.

Lithium und Mangan-(III/IV) enthaltende Spinelle und die Verwendung solcher Verbindungen als Kathodenmaterial in elektrochemischen Zellen sind allgemein bekannt, z.B. aus DE-A 4328755.

Im stöchiometrisch einfachsten Fall LiMn₂O₄ liegt in diesen Spinellen das Mangan in einer mittleren Oxidationsstufe von 3,5 vor.

Mit Verbindungen, die Lithiumkationen in ihr Gitter einbauen können wie Graphit, reagieren diese Spinelle reversibel unter Ausbau der kleinen Lithiumatome aus dem Kristallgitter, wobei in diesem Mangan-III-ionen zu Mangan-IV-ionen oxidiert werden. Diese Reaktion laßt sich in einer elektrochemischen Zelle zur Stromspeicherung nutzen, indem man die Lithium-Ionen aufnehmende Verbindung (Anodenmaterial), und den Manganspinell durch einen Elektrolyten trennt, durch welchen die Lithiumkationen aus dem Spinell in das Anodenmaterial wandern.

Zur Aufladung der Zelle fließen Elektronen durch eine äußere Spannungsquelle und Lithiumkationen durch den Elektrolyten vom Spinell zum Anodenmaterial. Bei der Nutzung der Zelle fließen die Lithiumkationen durch den Elektrolyten, die Elektronen hingegen durch einen Nutzwiderstand vom Anodenmaterial zum Spinell.

Für diese Reaktion kommt aber nicht nur der Spinell LiMn₂O₄ in Betracht, sondern auch, wie allgemein bekannt ist, Spinelle mit weiteren Metallkationen und abweichenden Wertigkeiten.

Weitere Metalle A sind beispielsweise Kobalt oder Nickel, welche das Mangan und das Lithium im Gitter zum Teil ersetzen oder welche auch zusätzlich in das Gitter eingebaut sein können. Durch diese Kationen A können die elektrischen Eigenschaften einer Li-Mn-Zelle abgewandelt werden, z.B. hinsichtlich der Spannung und des Spannungsabfalls.

Die Herstellung dieser Spinelle erfolgt, wie z.B. in DE-A 4328755 beschrieben, diskontinuierlich durch Umsetzung einer Lithiumverbindung, einer Manganverbindung und gegebenenfalls einer weiteren Metallverbindung bei erhöhten Temperaturen in einer bekanntermaßen sehr langsamen Feststoffdiffusionsreaktion.

Zur Verkürzung der Reaktionszeiten auf 48 bis 96 Stunden bei Temperaturen von 300 bis 750°C ist dabei ein Aufmahlen des Pulvers in einem inerten Lösungsmittel beschrieben.

Trotz des technischen Aufwandes lassen sich jedoch infolge der langen Reaktionszeiten und des Mahlschrittes nur schlechte Raum-Zeit-Ausbeuten erzielen.

Der Erfindung lag daher die Aufgabe zugrunde, ein wirtschaftliches und technisch einfaches Verfahren zur Herstellung von Lithium und Mangan-(III/IV) enthaltenden Spinellen zur Verfügung zu stellen.

Demgemäß wurde ein Verfahren zur Herstellung der obengenannten Spinelle durch Umsetzung stöchiometrischer Mengen einer Lithiumverbindung, einer Manganverbindung und gegebenenfalls einer weiteren Metallverbindung bei 200 bis 800°C unter Bedingungen, unter denen das Mangan eine Oxidationsstufe von 3,5 bis 4,0 einnimmt, gefunden, wobei man die Umsetzung unter Vermischung der Reaktanden vornimmt.

Ferner wurden neue Spinelle dieser Art, ihre Verwendung als Kathodenmaterial für elektrochemische Zellen sowie elektrochemische Zellen gefunden, welche sie als Kathodenmaterial enthalten.

Zur Durchführung des Verfahrens kann man bekannte Apparaturen verwenden, in denen man Feststoffreaktionen unter Vermischung des Reaktionsgutes vornimmt. Geeignet sind beispielsweise Drehkugeln, Schneckenförderer und vor allem Drehrohröfen.

Vorzugsweise enthalten die Drehrohröfen rotierende Einbauten, mit denen die Reaktanden durchmischt, von der Rohrinnenwand abgeschabt und gleichzeitig in Richtung der Drehachse des Rohres durch das Rohr gefördert werden. Ebenso sind auch Öfen mit rotierender Trommel und den entsprechend feststehenden Einbauten möglich. Näheres zu diesen Reaktionsapparaturen, die mit den erforderlichen Heizeinrichtungen versehen sein müssen, ist z.B. Ullmann's Encyclopedia of Industrial Chemistry, 5. Ed., VCH Verlagsgesellschaft mbH, Weinheim, 1992, Vol. B4, S. 107-111 zu entnehmen, so daß sich weitere Ausführungen hierzu erübrigen.

Die Reaktion wird bei Temperaturen von 200 bis 800°C, insbesondere 400 bis 750°C durchgeführt, wobei sich Reaktionszeiten von 0,5 bis 10 Stunden, vorzugsweise 0,5 bis 6 Stunden, insbesondere 1 bis 4 Stunden ergeben.

Als Lithiumverbindungen können Lithiumoxid oder Substanzen eingesetzt werden, die sich unter den Reaktionsbedingungen in Lithium enthaltende Oxide zersetzen, wie anorganische Lithiumsalze, beispielsweise Lithiumnitrat, Lithiumhydroxid oder vorzugsweise Lithiumcarbonat, organische Lithiumverbindungen wie Lithiumcarboxylate, beispielsweise Lithiumlaurat, Lithiumtartrat, vorzugsweise Lithiumoxalat oder Lithiumacetat, oder Lithium enthaltende Komplexverbindungen, wie Lithiumacetylacetonat. Auch Mischungen solcher Verbindungen sind geeignet.

Als Manganverbindungen kommen Substanzen in Betracht, die sich unter den Reaktionsbedingungen zu Mangan-(III/IV) enthaltenden Oxiden umsetzen, wie anorganische Mangansalze, beispielsweise Mangan-II-hydroxid, Mangan-III-hydroxid, Mangan-IV-hydroxid, Mangan-II-nitrat, Manganoxide oder vorzugsweise Mangan-II-carbonat, organische Manganverbindungen wie Mangancarborylate, beispielsweise Mangan-II-acetat, Mangan-III-acetat, Mangan-II-tartrat, Mangan-II-citrat oder vorzugsweise Mangan-II-oxalat, Mangan enthaltende Komplexverbindungen, beispielsweise Mangan-II-acetylacetonat oder Mischungen solcher Verbindungen.

Es können auch Lithium und Mangan enthaltende Mischverbindungen eingesetzt werden, wie sie in an sich bekannter Weise z.B. aus einer eine Lithium- und eine Manganverbindung enthaltenden Lösung durch gemeinsame Fällung oder Entfernen des Lösungsmittels erhalten werden können.

Geht man, wie es bevorzugt ist, von Verbindungen des zweiwertigen Mangans aus, ist die Mitverwendung von Sauerstoff enthaltenden Oxidationsmitteln erforderlich, etwa von Mangandioxid (Braunstein) oder am einfachsten von Luft. Setzt man hingegen eine höherwertige Manganverbindung ein, so verwendet man zweckmäßigerweise eine entsprechende Menge einer Mn-II-Verbindung oder ein Reduktionsmittel wie Kohlenmonoxid mit oder stellt die ManganWertigkeit am einfachsten mittels des Sauerstoffpartialdrucks eines Sauerstoff enthaltenden Gases ein.

Soll der Spinell Heteroatome enthalten, verwendet man bei dem erfindungsgemäßen Verfahren die entsprechenden Mengen von Oxiden oder Salzen dieser Metalle mit.

Allgemein entsprechen die Spinelle vorzugsweise der Formel I

Liₓ (Mnⁿ)₂ A_{y} O_{z} I

in der die Variablen folgende Bedeutung haben:
- x: 0,5 bis 1,6
- n: die mittlere Oxidationsstufe des Mangans im Bereich 3,5 bis 4,0
- A: das Äquivalent eines Metallkations
- y: 0 bis 0,4
- z: die sich aus der Menge der übrigen Komponenten ergebenden Sauerstoffäquivalente
Als Metalläquivalente A kommen vor allem diejenigen des Kobalts und des Nickels in Betracht. Man setzt sie vorzugsweise in oxidischer Form oder in Form von Salzen mit den gleichen Anionen wie der Lithium- und Mangansalze ein. Auch Mischungen solcher Verbindungen sind geeignet.

Eine Lithiumverbindung, eine Manganverbindung und gegebenenfalls eine weitere Metallverbindung können getrennt in die Reaktionsapparatur gegeben oder vorteilhaft vor der Umsetzung gemischt werden.

Verwendet man als Lithiumverbindung und besonders als Manganverbindung jeweils das Oxalat, so erhält man Spinelle in Form von bisher noch nicht bekannten vorzugsweise elongierten Partikeln mit Achsverhältnissen (Länge/Dicke) von 2:1 bis 20:1, insbesondere von 3:1 bis 10:1, welche sich besonders auch als Kathodenmaterial in elektrochemischen Teilen eignen, weil sie sich bei der an sich bekannten Herstellung des Kathodenmaterials leichter dispergieren lassen.

Für die Verwendung der Spinelle als Kathodenmaterial in elektrochemischen Zellen sind zur Erzielung eines guten Zyklisierverhaltens röntgenographisch einphasige Produkte erwünscht, wobei man unter dem Zyklisierverhalten den reversiblen elektrochemischen Ein- bzw. Ausbau von Lithium-Ionen in das Spinell-Gitter bzw. aus dem Gitter unter Ausgleich der Ladung durch Änderung der Oxidationsstufe des Mangans oder der gegebenenfalls vorhandenen weiteren Metallionen versteht.

Durch geeignete Wahl der Reaktionsbedingungen und Ausgangsstoffe können nach dem erfindungsgemäßen Verfahren Spinelle mit verschiedensten spezifischen Oberflächen hergestellt werden. So können sowohl Spinelle mit hohen spezifischen Oberflächen (gemessen nach DIN 66 132), wie 5 bis 12 m²/g, als auch solche mit niedrigen spezifischen Oberflächen, wie 0,1 bis 4 m²/g, erhalten werden.

Durch die Wahl der spezifischen Oberfläche kann man wesentliche anwendungstechnische Parameter wie die Dispergierbarkeit, Schüttdichte, Packungsdichte in der Elektrode oder die Stabilität des Spinells, insbesondere gegen chemische Zersetzung beeinflussen. Derartige Produkte lassen sich vorteilhaft durch ein atomares Verhältnis von Lithium zu Mangan von 0,5 zu 2 bis 1,6 zu 2, vorzugsweise 0,8 zu 2 bis 1,3 zu 2, insbesondere 0,9 zu 2 bis 1,12 zu 2, erhalten und weisen üblicherweise eine Kapazität von 100 bis 140 mAh/g auf.

Zur Herstellung des Kathodenmaterials werden die Spinelle in an sich bekannter Weise verarbeitet.

In elektrochemischen Zellen kann dieses Kathodenmaterial in an sich bekannter Weise gegen eine Lithiumkationen aufnehmende Anode eingesetzt werden.

Als Elektrolyt kommen in an sich bekannter Weise organische Verbindungen, bevorzugt Ester wie Ethylencarbonat und Propylencarbonat, oder Mischungen solcher Verbindungen in Betracht.

Derartige elektrochemische Zellen liefern in der Regel eine Spannung von 3,5 bis 4,5 V.

Der Lithium-Gehalt der Spinelle wurde durch Atomabsorptionsspektrometrie, der Gesamtmangangehalt nach Oxidation zu Mangan-IV als Mn₂P₂O₇ und der Gehalt an Mangan-III/IV durch Umsetzung mit Salzsäure und Messung des entstehenden Chlorgases bestimmt. Das Achsverhältnis (Länge/Dicke) wurde durch rasterelektronenmikroskopische Aufnahmen ermittelt. Die elektrische Kapazität der Spinelle wurde in einer Zelle mit Knopfzellen-Geometrie gegen eine Lithium-Anode mit LiClO₄ in Propylencarbonat als Elektrolyt in an sich bekannter Weise gemessen.

### Beispiele 1-3

In einem Drehrohr mit einem Innendurchmesser von 55 mm und einer auf 675°C beheizten Länge von 700 mm, das zur Durchmischung des Reaktionsgemischs mit einer statischen Förderschnecke mit Stegen versehen war, wurden Mischungen aus einer Lithium- und einer Manganverbindung unter einer Luftzufuhr von 200 l/Stunde umgesetzt. Die Drehzahl des Rohres wurde so geregelt, daß die Verweilzeit des Reaktionsgemisches in der beheizten Zone 2 Stunden betrug.

Die Einzelheiten dieser Versuche sowie deren Ergebnisse sind der nachstehenden Tabelle zu entnehmen.

Die Spinelle besaßen eine Kapazität von 100-110 mAh/g.

Die elongierten Spinelle wiesen ein Achsverhältnis (Länge/Dicke) von 3:1 bis 10:1 auf.

### Beispiele 4-15

In einem 250 ml-Drehkolben wurden 70 g von Mischungen aus einer Lithium- und einer Manganverbindung unter einer Luftzufuhr von 50 l/Stunde umgesetzt. Die Verweilzeit des Reaktionsgemisches betrug 2 Stunden.

Die Einzelheiten dieser Versuche sowie deren Ergebnisse sind der nachstehenden Tabelle zu entnehmen.

Die Spinelle besaßen eine Kapazität von 100-110 mAh/g.

### Vergleichsbeispiel

Eine Mischung aus Lithiumcarbonat und Mangancarbonat wurde in einem Tiegel 2 Stunden unter Luft auf 675°C erhitzt.

Es wurde kein zur Herstellung von Kathodenmaterial geeigneter Spinell gefunden.

Die Einzelheiten dieses Versuchs sowie dessen Ergebnis sind der nachstehenden Tabelle zu entnehmen.

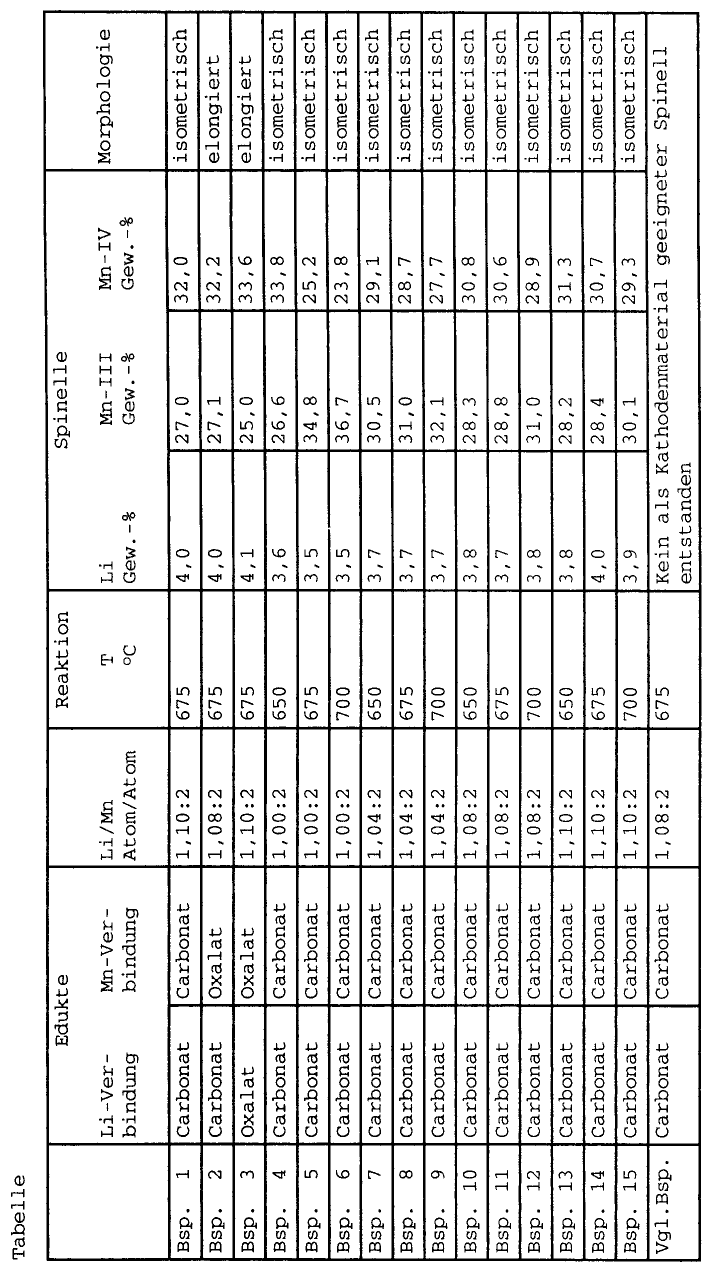

## Patentansprüche

1. Verfahren zur Herstellung von Lithium und Mangan-(III/IV) enthaltenden Spinellen durch Umsetzung stöchiometrischer Mengen einer Lithiumverbindung, einer Mangenverbindung und gegebenenfalls einer weiteren Metallverbindung bei 200 bis 800°C unter Bedingungen, unter denen das Mangen eine durchschnittliche Oxidationsstufe von 3,5 bis 4,0 einnimmt, dadurch gekennzeichnet, daß man die Umsetzung unter Vermischung der Reaktanden vornimmt.

2. Verfahren nach Anspruch 1, dadurch gekennzeichnet, daß man die Umsetzung in einem Drehrohrofen vornimmt.

3. Verfahren nach Anspruch 1 oder 2, dadurch gekennzeichnet, daß man es zur Herstellung von Spinellen der Formel I anwendet
Liₓ (Mnⁿ)₂ A_{y} O_{z} I
in der die Variablen folgende Bedeutung haben:
x 0,5 bis 1,6
n die mittlere Oxidationsstufe des Mangans im Bereich 3,5 bis 4,0
A das Äquivalent eines Metallkations
y 0 bis 0,4
z die sich aus der Menge der übrigen Komponenten ergebenden Sauerstoffäquivalente

4. Verfahren nach den Ansprüchen 1 bis 3, dadurch gekennzeichnet, daß man das Mangan in Form von Mn-II-oxalat einsetzt und unter sauerstoffhaltiger Atmosphäre arbeitet.

5. Verfahren nach den Ansprüchen 1 bis 4, dadurch gekennzeichnet, daß man das Lithium in Form von Lithiumcarbonat einsetzt.

6. Verfahren nach den Ansprüchen 1 bis 3 zur Herstellung von Spinellen mit einer spezifischen Oberfläche (BET-Oberfläche) von 0,1 bis 4 m²/g, dadurch gekennzeichnet, daß man das Lithium in Form von Lithiumcarbonat oder Lithiumacetat und das Mangan in Form von Mangancarbonat einsetzt.

7. Lithium und Mangan- (III/IV) enthaltende Spinelle, erhältlich nach dem Verfahren gemäß den Ansprüchen 4 bis 6.

8. Verwendung der Lithium und Mangan-(III/IV) enthaltenden Spinelle gemäß Anspruch 7 als Kathodenmaterial für elektrochemische Zellen.

9. Elektrochemische Zellen, enthaltend als Kathodenmaterial einen Lithium und Mangan-(III/IV) enthaltenden Spinell gemäß Anspruch 7.
